# EUROPEAN PATENT SPECIFICATION

(11) **EP 1 966 758 B1**
(45) Date of publication and mention of the grant of the patent: **02.09.2009**
(21) Application number: 06831939.1
(22) Date of filing: 27.11.2006
(51) Int. Cl.: G06T 7/00

(54) **COMPUTER-BASED FACIAL PARALYSIS ASSESSMENT**
COMPUTERGESTÜTZTE GESICHTSLÄHMUNGSBEWERTUNG
EVALUATION DE PARALYSIE FACIALE INFORMATISEE

(30) Priority: 21.12.2005 EP 05112547; 21.02.2006 EP 06110189
(43) Date of publication of application: 10.09.2008
(73) Proprietor: Koninklijke Philips Electronics N.V., 5621 BA Eindhoven (NL); Philips Intellectual Property & Standards GmbH, 20099 Hamburg (DE)
(72) Inventor: WILLMANN, Richard, D., NL-5656 AA Eindhoven (NL); LANFERMANN, Gerd, NL-5656 AA Eindhoven (NL); KNEISSLER, Jan, NL-5656 AA Eindhoven (NL)
(74) Representative: Schouten, Marcus Maria
(86) International application number: PCT/IB2006/054440
(87) International publication number: WO 2007/072246

(56) References cited:
- EP-A1- 0 999 518
- US-A- 5 882 192
- US-A- 6 056 671
- WANG S ET AL: "OBJECTIVE FACIAL PARALYSIS GRADING BASED ON PFACE AND EIGENFLOW" MEDICAL AND BIOLOGICAL ENGINEERING AND COMPUTING, SPRINGER, HEILDELBERG, DE, vol. 42, no. 5, September 2004 (2004-09), pages 598-603, XP001221018 ISSN: 0140-0118
- MINAMITANI H ET AL: "Computerized diagnosis of facial nerve palsy based on optical flow analysis of facial expressions" PROCEEDINGS OF THE 25TH. ANNUAL INTERNATIONAL CONFERENCE OF THE IEEE ENGINEERING IN MEDICINE AND BIOLOGY SOCIETY. CANCUN, MEXICO, SEPT. 17, vol. VOL. 4 OF 4. CONF. 25, 17 September 2003 (2003-09-17), pages 663-666, XP010693412 ISBN: 0-7803-7789-3

## Description

This invention relates to a computer-based system for assessing facial paralysis, which is particularly adapted for use by untrained personnel. In particular, it is adapted to be used in a stroke rehabilitation system to deal with disabilities caused by stroke.

A typical known computer-based system for assessment of facial paralysis includes a camera which is used to detect facial expressions, and requires a strictly controlled environment with the patient accurately positioned relative to the camera and supervised by a clinical professional. Otherwise it is not possible to obtain consistent results, since variations in the patient's position or attitude relative to the camera will, of course, influence the resulting camera image.

In order to assess and grade the facial paralysis of a patient, various methods have been used in order to obtain an objective measurement of standard expressions such as smiling, whistling, or raising the eyebrows. Since the symmetry of movement in the two halves of the face is used as the indicator for facial paralysis, it is crucial to be able to separate the motion of the facial muscles from the motion of the complete head. Consequently, several methods have been proposed for achieving this in the past. For example, markers can be manually placed in standard positions on the face of the patient, and a series of photographs taken during the patient's changes of facial expression are compared in order to make the necessary assessment. Other systems involve fixing the patient's position by means of a clamping device, for example, or alternatively, having the patient wearing a helmet camera, so that movement of the patient's head does not affect the photographic results. Thus, methods of this kind require either the specialized skill of an operator in order to properly place the markers on the patient's face, or some kind of special apparatus designed to restrict or compensate for the patient's movement, so that none of the prior proposals are suitable for use as a primary health care solution at home.

For example, WO 92/03801 (University of Oklahoma) describes a system of assessing motion of a body part such as an individual's face, using a computerized system including a video camera in which different methods of allowing for, or preventing, movement of the subject relative to the camera, are discussed in some detail. In particular, this application describes the use of marker dots on the face of the patient, or a head holder for securing the patient's head in a desired position.

Accordingly, the present invention provides a computer-based system for grading facial paralysis according to claim 1.

In one embodiment of the invention, the system comprises a camera which can be mounted in a optimum position to enable it to capture images of the user's face while the user is viewing a monitor of the computer and the images are displayed on the monitor. A visible indication, such as a small image box or frame, is also provided to enable the user to adjust his position suitably so that his face fits in the desired field. In this embodiment the camera is preferably adapted to be mounted centrally on top of the monitor to facilitate proper alignment with the user.

Preferably, the system is provided with a user interface which combines vision and speech-based means of communicating with the patient, so as to instruct him or her to correct their position and to perform the required exercises, to enable the system to make the proper grading of the patient's degree of paralysis.

If the camera is arranged on the computer monitor, it is preferably provided with a zoom facility, at least, to enable the size of the image of the patient's face to be adjusted.

Preferably, the camera system is provided with a pan/tilt/zoom facility, so as to enable both the relative size and position of the patient's head to be suitably adjusted, without requiring a very high degree of accurate positioning of the camera, or the patient's head, or fine adjustment of the position in use. This is particularly useful if the camera is separately mounted from the monitor. In any case, the system preferably includes an arrangement for automatically controlling the camera zoom, so as to adjust the scale and resolution of the image of the detected face, to match the system requirements.

Preferably, the system is so arranged as to detect specific facial features in the region of the patient's face, especially the outer corners of the eyes and the tip of the nose, in order to normalize the image to a standard size and orientation, and to define a symmetry line in the face to enable any asymmetry of facial movements to be computed. In this connection, it will be appreciated that, because of the differences in geometry of the faces of various patients, it is necessary to detect details of the facial features, as well as the overall size and position of the head, in order to obtain an accurate result.

Accordingly, a preferred embodiment of the invention provides a system for assessing the degree of facial paralysis of a patient, comprising a camera for capturing a sequence of images of the face during specified movements or exercises, to a processing unit, the system including optical, mechanical and/or digital means to allow adjustment of position and scale of the patient's face; a display for providing visual feedback to the patient, means for detecting a face included in the image, and means for identifying facial features in the image, in order to normalize the image to a standard size and orientation, by adjusting the camera position and zoom controls; and means for analyzing the flow of movement in the image, the processing unit being adapted to analyze the sequence of images in order to produce a resultant grading.

The system further comprises means for detecting whether the patient's face is rotated out of the image plane, in order to provide corresponding instructions to the patient, to correct their position, and means for detecting whether a requested facial movement has been completed, in order to check the user's compliance with the instructions from the system.

In use, the results of the detection process are used to produce a parameter vector describing the recorded movement, and a classifier for the parameter vector supplies the patient, and their medical professional, with a grading of the degree of facial paralysis.

One embodiment of the invention will now be described by way of example, with reference to the accompanying drawings in which:
Fig. 1 shows a computer screen display showing the system in use;
Fig. 2 is a flow chart of the operation of the system;
Fig. 3 is a chart showing an asymmetry measurement during smiling movement.

The apparatus required to operate the system comprises a computer, and a zoom video camera which is adapted to be mounted on or adjacent the computer display, so as to enable the user to operate the system himself, while facing the computer display unit. The computer preferably has a sound output capability, and preferably also, a voice recognition system to allow it to be controlled by voice commands from the patient. In one embodiment (not shown) the camera is separately mounted on a motorized pan/tilt unit controlled by the computer.

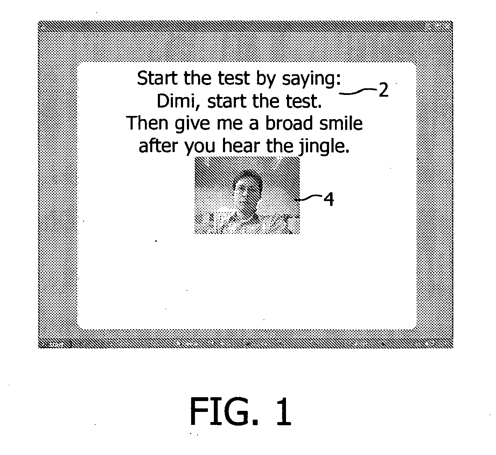

Figure 1 shows a resultant display, at the start of operation of the system, which comprises a series of text instructions, as well as the initial image of the user facing the camera, which is not shown in the Figure. It will be appreciated that the instructions may be displayed on the screen or produced as speech output from a computer and in the following description, it will be understood that either or both of these methods may be used at various stages of the procedure.

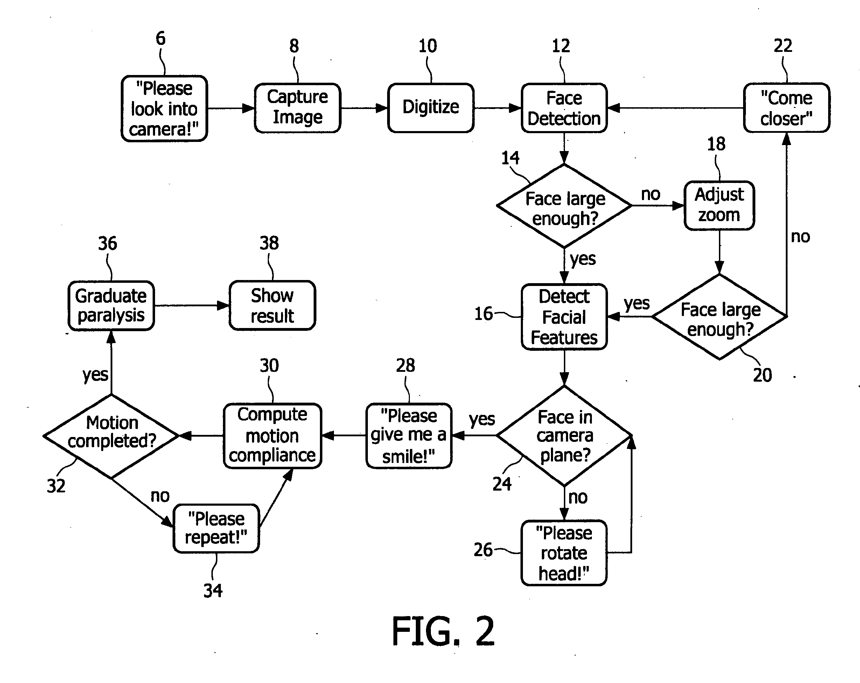

Figure 2 illustrates the overall mode of operation of the system, which begins by giving a prompt which is shown on the display, and may also be spoken by a speech synthesizer, as indicated at 6, requesting the patient to look into the camera. It will also be understood that the system may be provided with voice recognition means so that it can be operated by voice commands from the user. The image is then captured (8), digitized (10) and subjected to a face detection procedure (12).

If the subject's face appears to be approximately large enough (14) the processing proceeds to step 16 at which facial features are detected. In particular the outer corners of the eyes, and the tip of the nose, provide good reference points which form a stable triangle regardless of expression. Accordingly, these can be compared with a standard reference triangle to establish the exact size and position of the face. If not, the camera zoom is adjusted (step 18) and if it is then large enough (step 20) the facial feature detection step 16 can be attempted again. If it is still not large enough, the process branches to step 22 where the patient will be prompted to come closer, and the face detection procedure will then begin again at 12.

Once the facial features have been successfully detected, the process proceeds to step 24 at which the orientation of the face, relative to the camera plane is detected and if it is determined that the plane of the face is not aligned with the camera plane, a message is displayed (26) requesting that the patient's head be rotated appropriately.

Once the orientation of the face has been suitably corrected, a further message is displayed, asking the patient to carry out an action to form a particular facial expression, such as a smile (step 28) and the flow of action is followed (step 30) to detect whether the appropriate motion has been completed (step 32). If it appears that a suitable motion has not been completed, a message will be displayed requesting that the motion is repeated (step 34), and once the motion has been appropriately completed, the degree of paralysis can be analyzed (step 36) and the result displayed (step 38).

The analysis is carried out, by computing a vector of asymmetry measures, and this is compared to data from a group of stroke victims and a healthy control group, in order to grade the user's performance. The historical data of the performance of the user is stored in a database, so that a chart can be generated, showing the user's progress. This personalized analysis allows rehabilitation success to be graded, as well as allowing reliable detection of relapse or recurrences/events.

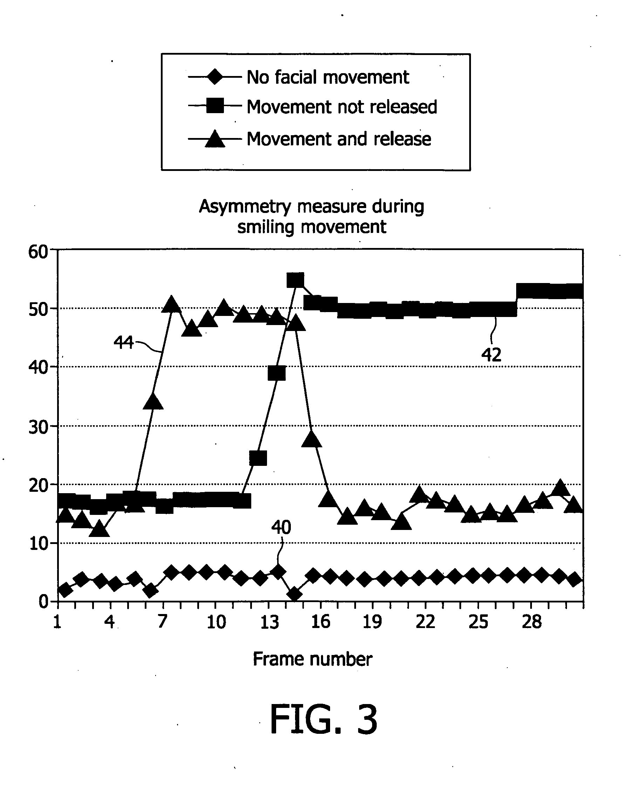

Figure 3 illustrates some typical measurements of asymmetry during a smiling movement, in which the lower plot (diamond shaped markers) indicated by reference 40 shows a series of measurements in which no facial movement is detected. The part of squares 42, on the other hand indicate a facial movement in which the requested expression is achieved, but not subsequently released, while plot 44, indicated by a series of triangles, shows a normal facial movement and release, as would be expected from a healthy control group.

It will also be appreciated that the invention can be embodied in a somewhat simplified system requiring a minimum of positioning adjustment by the user, if the camera is mounted centrally on the top of the computer monitor. The user will then arrange him or herself so that their face is shown suitably framed on an image of the display and the system will proceed with face detection as outlined above. If necessary, optical or digital zooming may be employed to adjust the scale of the face image, and digital processing may also be applied to the image to improve image quality.

It will also be appreciated that the invention may be implemented by means of a "server-side" processing arrangement with the user having a thin-client application running on his own computer. For example the thin-client could be a "Javascript" application running in a web-browser which is arranged to access a server carrying the main application program, and a database of patient information via the internet or a LAN.

## Claims

1. A computer-based system for grading facial paralysis which is adapted to be operated by a patient, including a camera system for collecting a series of images of the patient's face during specified movements and exercises for analysis by a processing unit, the camera system including optical, mechanical and/or digital means to allow adjustment of position and scale of the patient's face; a display which provides visual feedback to the patient so that the computer system can prompt the patient to carry out specific movements or facial exercises;
the processing unit including means for detecting a face included in the image; means for identifying facial features in the image, in order to normalize the image to a standard size and orientation by adjusting the optical, mechanical and/or digital means; means for analyzing the flow of movement in the image to produce a resultant grading; means for detecting whether the patient's face is rotated out of the image plane in order to determine whether the patient is in the desired position, and means for detecting whether a requested facial movement has been completed, in order to check the patient's compliance with the instructions from the system.

2. A system according to claim 1 in which the system is arranged to display an image field or frame so that in use, the patient can adjust their position to fit the field or frame.

3. A system according to claim 1 in which the means for identifying facial features is adapted to detect the outer corners of the eyes, and the tip of the nose, and to compare them with a reference in order to establish the position and orientation of the face.

4. A system according to any preceding claim, further comprising a speech-based interface for communicating with the patient.

5. A system according to any preceding claim further comprising means for storing data relating to a group of stroke victims and a healthy control group; means for grading a current patient's performance by comparison with the stored data and for storing a series of results in a database, and means for grading the patient's progress by comparing the stored results.

## Patentansprüche

1. Computergestütztes System zur Einstufung von Gesichtslähmung, das für die Betätigung durch einen Patienten vorgesehen ist und Folgendes umfasst: ein Kamerasystem zum Erfassen einer Reihe von Bildern des Patientengesichts während bestimmter Bewegungen und Übungen zur Analyse durch eine Verarbeitungseinheit, wobei das Kamerasystem optische, mechanische und/oder digitale Mittel zum Ermöglichen einer Positions- und Maßstabsjustierung für das Patientengesicht umfasst; und eine Anzeige, um dem Patienten eine visuelle Rückmeldung zu geben, so dass das Computersystem den Patienten auffordern kann, bestimmte Bewegungen oder Gesichtsübungen durchzuführen;
wobei die Verarbeitungseinheit Folgendes umfasst: Mittel zum Erkennen eines in dem Bild enthaltenen Gesichts; Mittel zum Identifizieren von Gesichtsmerkmalen in dem Bild, um das Bild auf eine Standardgröße und Ausrichtung zu normieren, indem die optischen, mechanischen und/oder digitalen Mittel justiert werden; Mittel zum Analysieren des Bewegungsablaufs in dem Bild, um eine resultierende Einstufung zu liefern; Mittel zum Erkennen, ob das Gesicht des Patienten aus der Bildebene herausgedreht ist, um festzustellen, ob sich der Patient in der gewünschten Position befindet; und Mittel zum Erkennen, ob eine geforderte Gesichtsbewegung vollständig ausgeführt wurde, um zu prüfen, ob der Patient den Anweisungen des Systems nachkommt.

2. System nach Anspruch 1, wobei das System vorgesehen ist, um ein Bildfeld oder Einzelbild so anzuzeigen, dass der Patient bei Verwendung des Systems seine Position passend für das Bildfeld oder Einzelbild anpassen kann.

3. System nach Anspruch 1, wobei das Mittel zum Identifizieren von Gesichtsmerkmalen vorgesehen ist, um die äußeren Augenwinkel sowie die Nasenspitze zu erkennen und sie mit einer Referenz zu vergleichen, um die Position und Ausrichtung des Gesichts festzustellen.

4. System nach einem der vorhergehenden Ansprüche, weiterhin mit einer sprachgestützten Benutzeroberfläche zur Kommunikation mit dem Patienten.

5. System nach einem der vorhergehenden Ansprüche, das weiterhin Folgendes umfasst: Mittel zum Speichern von Daten, die sich auf eine Gruppe von Schlaganfallopfern und eine gesunde Kontrollgruppe beziehen; Mittel zum Einstufen des aktuellen Leistungsvermögens eines Patienten durch Vergleichen mit den gespeicherten Daten und zum Speichern einer Reihe von Ergebnissen in einer Datenbank; und Mittel zum Einstufen des Fortschritts des Patienten durch Vergleichen der gespeicherten Ergebnisse.

## Revendications

1. Système informatisé pour évaluer une paralysie faciale qui est adapté pour être utilisé par un patient, comprenant un système de caméras servant à collecter une série d'images du visage du patient lors de mouvements et d'exercice spécifiés pour effectuer une analyse par une unité de traitement, le système de caméras comprenant des moyens optiques, mécaniques et/ou numériques pour permettre l'ajustement de la position et de l'agrandissement du visage du patient ; un écran fournissant un retour visuel au patient de manière à ce que le système informatisé puisse demander au patient d'effectuer des mouvements spécifiques ou des exercices faciaux ;
l'unité de traitement comprenant des moyens permettant de détecter un visage inclus dans l'image ; des moyens permettant d'identifier des caractéristiques faciales dans l'image afin de normaliser l'image à une taille et orientation standards par l'ajustement des moyens optiques, mécanique et/ou numériques ; des moyens permettant d'analyser le déroulement du mouvement dans l'image afin de produire une évaluation résultante ; des moyens permettant de détecter si le visage du patient est tourné hors du plan de l'image afin de déterminer si le patient se trouve dans la position souhaitée, et des moyens permettant de détecter si un mouvement facial requis a été accompli afin de vérifier si le patient se conforme aux instructions provenant du système.

2. Système selon la revendication 1, dans lequel le système est conçu pour afficher un champ ou un cadre d'image, de manière à ce que lors de l'utilisation le patient puisse ajuster leur position pour correspondre au champ ou au cadre.

3. Système selon la revendication 1, dans lequel les moyens permettant d'identifier des caractéristiques faciales est adapté pour détecter les coins externes des yeux et le bout du nez, et pour les comparer à une référence afin d'établir la position et l'orientation du visage.

4. Système selon l'une quelconque des revendications précédentes, comprenant en outre une interface vocale pour communiquer avec le patient.

5. Système selon l'une quelconque des revendications précédentes, comprenant en outre des moyens permettant de stocker des données relatives à un groupe de victimes d'un accident cérébrovasculaire et à un groupe témoin en bonne santé ; des moyens permettant d'évaluer une performance actuelle du patient par comparaison avec des données stockées et de stocker une série de résultats dans une base de données, et des moyens permettant d'évaluer la progression du patient en comparant les résultats stockés.
